# EUROPEAN PATENT APPLICATION

(11) **EP 0 884 880 A2**
(43) Date of publication of application: **16.12.1998**
(21) Application number: 98304597.2
(22) Date of filing: 10.06.1998
(51) Int. Cl.: H04L 29/06

(54) **Data transmitting apparatus, data receiving apparatus, data transmitting system and data transmitting method**

(30) Priority: 10.06.1997 JP 152677/97
(71) Applicant: SONY CORPORATION, Tokyo (JP)
(72) Inventor: Kojima, Takashi, Shinagawa-ku, Tokyo (JP); Aoki, Yukihiko, Shinagawa-ku, Tokyo (JP)
(74) Representative: Nicholls, Michael John

(57) **Abstract**

In data communication by packets of data, transmission not only commands but also data that cannot be accommodated in one packet is to be achieved by a packet similar to one used in exchanging-commands. To this end, a field in which to store the information specifying the format of a frame in a packet is provided in the packet. As one of the formats that can be discriminated by this field, there is provided a format which provides so that the frame has a packet label field which to store the information specifying the relation between plural packets divided from the transmission data and a data field in which to store the command and/or optional data for an equipment of destination of transmission.

## Description

This invention relates to a data transmitting apparatus, data receiving apparatus, data transmitting system and data transmitting method. In particular, it relates to a data transmitting apparatus, data receiving apparatus, data transmitting system and data transmitting method suitably employed for transmitting and receiving data by the IEEE 1394 Asynchronous packet.

As a bus for interconnecting personal computers, external storage devices, such as hard disc devices, output devices, such as printers, or AV devices, such as digital video disc players or still cameras, for doing data transmission/reception, there is a bus IEEE 1394 High Performance Serial Bus, abbreviated herein to IEEE 1394 bus, prescribed by the Institute of Electrical and Electronics Engineers 1394, abbreviated herein to IEEE 1394. In the IEEE 1394 bus, ID numbers are allocated to the interconnected nodes and data are transmitted or received by packets between these nodes.

Among IEEE 1394 bus modes, there are an Isochronous mode doing peridotic packet transmission/reception and an Asynchronous mode doing packet transmission/reception without regard to the period of transmission/reception. The Isochronous mode guarantees data transmission every pre-set time interval and is suited for data transmission in which data need to be transferred in a pre-set amount every pre-set time period. On the other hand, the Asynchronous mode is used for exchanging commands between the devices interconnected by the IEEE 1394 bus.

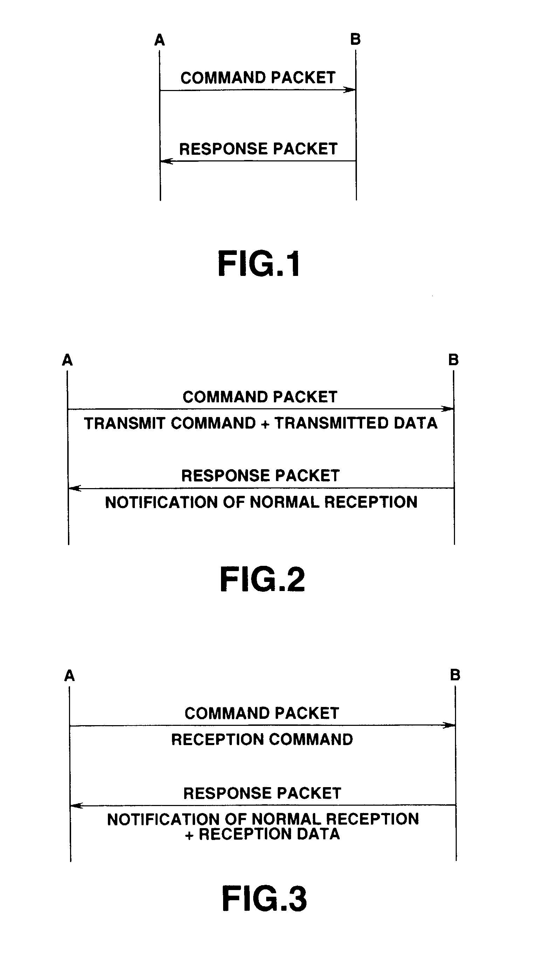

In the conventional practice, a response packet accommodates a command packet. That is, in transmitting a command from the node A to the node B, as shown in Fig. 1, a command packet including a command for the node B is transmitted from the node A to the node B. On reception of the command packet, the node B transmits a response packet to the node A as a response to the command packet.

Specifically, when sending data from the node A to the node B, as shown in Fig. 2, a command packet including a transmission command requesting data transmission and transmission data transmitted to the node B is sent from the node A to the node B. The node B receiving the command packet transmits, by way of a response to the command packet, a response packet to the node A for indicating that the command packet has been received as normally.

For sending data from the node B to the node A responsive to the request from the node A, as shown in Fig. 3, a command packet including a reception command requesting data reception is first transmitted from the node A tote node B. The node B receiving the command packet transmits to the node A a response packet including a notification of normal reception and reception data requested by the reception command by way of a response to the command packet. The notification of normal reception specifies that the command packet has been received as normally.

In the examples shown in Figs.2 and 3, each one of the command packet and the response packet is sent. However, if the amount of transmitted data exceeds the maximum packet size, data need to be split into plural packets. That is, there is a limitation on the packet size, such that, if a large amount of data constituting an entity is sent, such data needs to be split into a transmission enabling size for doing data transmission.

If data is sent in *n* split packets from the node A to the node B, a command packet c1 including a transmission command and 1/n transmission data is first sent from the node A to the node B. The 1/n transmission data is one of *n* split fragments of data to be sent to the node B. The node B receiving the command packet c1 transmits to the node A a response packet r1 including a notification of normal reception specifying that the command packet has been received as normally. This sequence of operations is repeated *n* times. Therefore, if the time required for exchanging a command packet and a response packet is *t*, the time equal to n×t is required for transmitting *n* split data fragments.

In the conventional Asynchronous mode, each one response packet needs to be received each time a command packet is sent. If data is split into plural packets which are sent continuously, there is no method of ascertaining data continuity. By this reason, it has not been possible to split data into plural packets and to send the packets continuously. Also, in the conventional Asynchronous mode, it is presupposed to receive a response packet each time a command packet is sent, such that there lacks a method for establishing the sequence of data transmission throughout plural packets between nodes taking part in transmission/reception. That is, in the conventional Asynchronous mode, it has not been possible to establish the sequence between transmission/reception nodes to perform continuous data transmission/reception.

Specifically, in exchanging command and response packets in the conventional Asynchronous mode, it is possible to associate the command and response packets only in a one-for-one instance, while there lacks a method for associating plural command packets or plural response packets. Thus, in the conventional Asynchronous mode, if a large quantity of data in a lump is split into sizes which allow for transmission, it is necessary to receive a response packet each time a command packet is sent, such that an extremely long time interval is required for data transmission. Stated differently, the conventional Asynchronous mode, which is convenient for transmission/reception of commands accommodated in one packet, is extremely inconvenient for transmission/reception of data that cannot be accommodated in a packet.

Although the IEEE 1394 bus is taken as an example, the above-described problem occurs with other than the IEEE 1394 bus. In general, in a packet premised on sending a command, a response packet is received each time a command packet is sent. The above-described problem is raised in connection with this type of interface.

In one aspect, the present invention provides a data transmission apparatus for transmitting packet data including means for transmitting data in a pre-set format, which format has the information specifying an attribute common to a packet group made up of a plurality of packets and/or an attribute of each packet making up the packet group.

In another aspect, the present invention provides a data reception apparatus for receiving packet data including means for receiving data of a pre-set format, which format has the information specifying an attribute common to a packet group made up of a plurality of packets and/or an attribute of each packet making up the packet group.

In a further aspect, the present invention provides a method for transmitting packet data including the step of transmitting data in a pre-set format, which format has the information specifying an attribute common to a packet group made up of a plurality of packets and/or an attribute of each packet making up the packet group.

In a further aspect, the present invention provides a method for receiving packet data including the step of receiving data of a pre-set format, which format has the information specifying an attribute common to a packet group made up of a plurality of packets and/or an attribute of each packet making up the packet group.

In a further aspect, the present invention provides a data structure of a packet data of a pre-set format, which format has the information specifying an attribute common to a packet group made up of a plurality of packets and/or an attribute of each packet making up the packet group.

In a further aspect, the present invention provides a recording medium having stored thereon packet data of a pre-set format, which format has the information specifying an attribute common to a packet group made up of a plurality of packets and/or an attribute of each packet making up the packet group.

In a further aspect, the present invention provides a communication apparatus for transmitting/receiving packet data including means for transmitting data in a pre-set format and means for receiving data in the pre-set format. The format includes the information specifying an attribute common to a packet group made up of a plurality of packets and/or an attribute of each packet making up the packet group.

In a further aspect, the present invention provides a communication method for transmitting/receiving packet data, comprising the steps of transmitting data in a pre-set format and receiving data in the pre-set format. This format includes the information specifying an attribute common to a packet group made up of a plurality of packets and/or an attribute of each packet making up the packet group.

In yet another aspect, the present invention provides a communication method for transmitting/receiving a plurality of (*n* number of) packet data of a pre-set format, which format includes the information specifying an attribute common to a packet group made up of a plurality of packets and/or an attribute of each packet making up the packet group. This method includes a first step of transmitting/receiving the common attribute and the attribute of each packet; and a n'th step of transmitting/receiving the common attribute which is the same as the common attribute and the attribute of each packet different from that transmitted or received in the first step.

Accordingly, not only commands but also data that cannot be accommodated in one packet can be efficiently transmitted or received by packets similar to those used for transmitting or receiving commands.

In particular, if the present invention is applied to an Asynchronous packets prescribed in IEEE1394, a large quantity of data that cannot be accommodated in one packet can be efficiently by packets similar to those used in transmitting or receiving the commands.

Thus, the present invention can provide a data transmitting apparatus, data receiving apparatus, data transmitting system and data transmitting method in which transmission/reception not only of commands but of data not accommodated in one packet can be efficiently performed efficiently by a packet similar to one used for command transmission/reception.

The invention will be further described by way of example with reference to the accompanying drawings, in which:-

Fig.1 shows packet exchange in the conventional Asynchronous mode and specifically the manner in which a response command is returned for a command packet.

Fig.2 shows packet exchange in the conventional Asynchronous mode and specifically packet exchange at the time of data transmission.

Fig.3 shows packet exchange in the conventional Asynchronous mode and specifically packet exchange at the time of data reception.

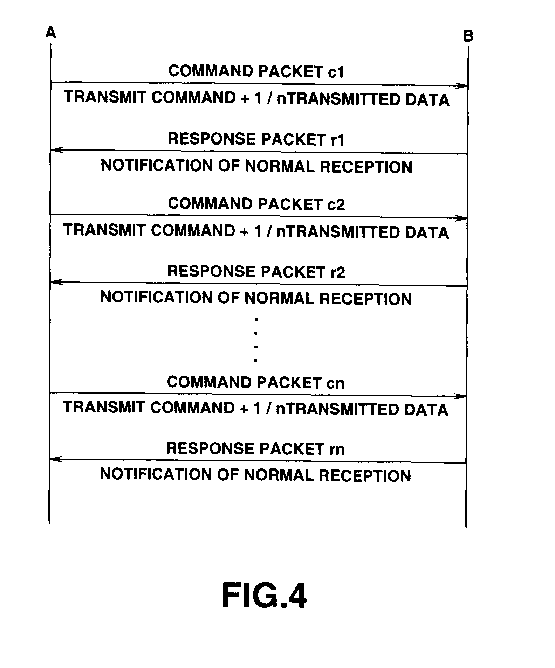

Fig.4 shows the sequence of packet exchange at the time of splitting transmission data into plural command packets and sending the split command packets in the conventional Asynchronous mode.

Fig.5 is a block diagram showing the state of interconnection of respective equipments in accordance with the present invention.

Fig.6 shows the sequence of exchange of command and response packets when returning a sole response command to a sole command packet.

Fig.7 shows the sequence of exchange of command and response packets when returning a sole response command to plural command packets.

Fig.8 shows the sequence of exchange of command and response packets when returning plural response commands to a sole command packet.

Fig.9 shows the manner of command and response packets when write data is split into plural command packets which are sent out.

Fig.10 shows the manner of command and response packets when readout data is split into plural command packets which are received.

Fig.11 shows the structure of a frame structure of the Asynchronous packets.

Fig.12 shows a frame structure of an AV/C command frame.

Fig.13 shows a frame structure of an AV/C response frame.

Fig.14 shows a frame structure of an illustrative command frame used in the present invention.

Fig.15 shows a frame structure of an illustrative response frame used in the present invention.

Fig.16 shows a frame structure of another illustrative command frame used in the present invention.

Fig.17 shows a frame structure of another illustrative response frame used in the present invention.

Fig.18 shows an example of employing a command packet including the command frame shown in Fig.14 and specifically the case of returning a response command to three command packets.

Fig.19 shows the manner of an illustrative use of a response packet inclusive of the response frame shown in Fig.15 and specifically the case of returning three response commands to a sole command packet.

Fig.20 shows a modeled concept of data transmission for an example of data transmission embodying the present invention.

Fig.21 shows an example of a data transmission sequence embodying the present invention and specifically an exchange sequence of command and response packets during data writing.

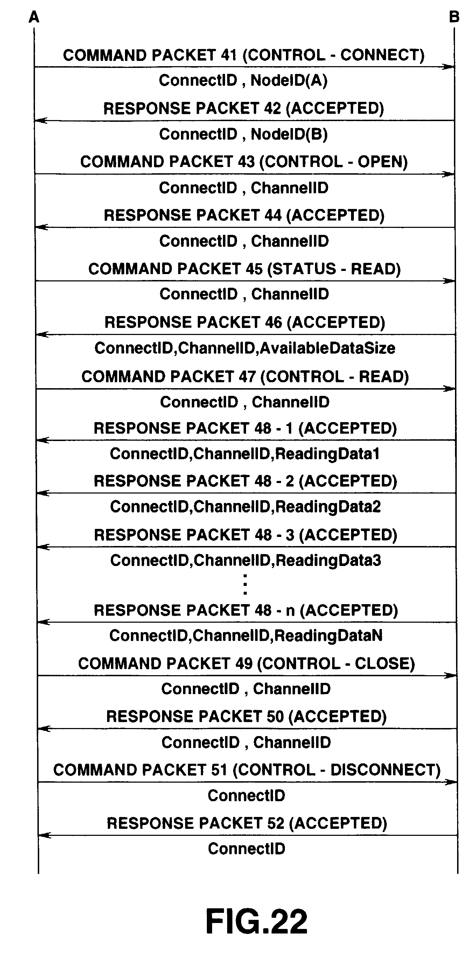

Fig.22 shows an example of a data transmission sequence embodying the present invention and specifically an exchange sequence of command and response packets during data readout.

Referring to the drawings, preferred embodiments of the present invention will be explained in detail.

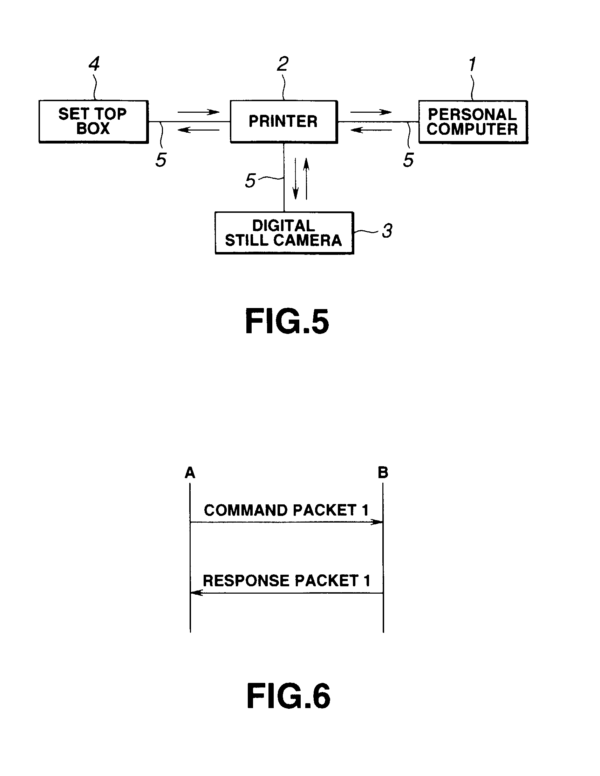

Fig.5 shows an embodiment of the present invention and specifically shows a state in which a personal computer 1, a printer 2, a digital still camera 3 and a set top box 4 are interconnected over an IEEE 1394 bus 5. The present invention is applied to a system for doing data transmission/reception by the Asynchronous mode as an asynchronous packet transmission mode between equipments interconnected by the IEEE 1394 bus as shown in Fig.5. The packets exchanged in the Asynchronous mode are termed Asynchronous packets.

It suffices if the equipments adapted for exchanging Asynchronous packets can be interconnected over the IEEE 1394 bus. These equipments may be enumerated by external storage devices, such as hard disc devices, output devices, such as plotters, or AV equipments, such as digital video disc players, in addition to the personal computer 1, printer 2, digital still camera 3 and the set top box 4 shown in Fig.5.

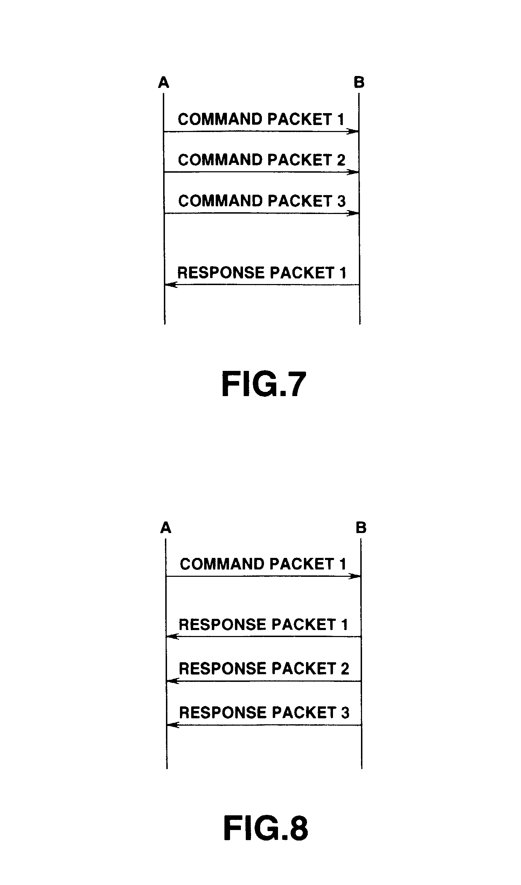

Heretofore, in exchanging Asynchronous packets between equipments, a sole response packet necessarily deals with plural command packets a sole command packet. Conversely, in exchanging Asynchronous packets in accordance with the present invention, it is possible for a sole response packet to deal with a sole command packet, as shown in Fig.6, while it is also possible for a sole response packet to deal with plural command packets, as shown in Fig.7 or for plural response packets to deal with a sole command packet, as shown in Fig.8.

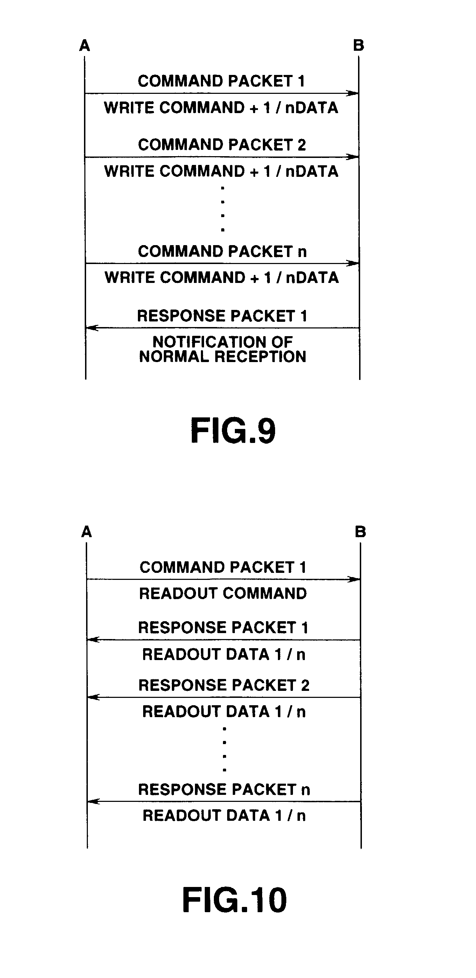

Fig.9 shows an example in which a sole response packet deals with plural command packets. Specifically, Fig.9 shows the sequence of packet exchange when splitting data written on the node B into *n* packets and transmitting the packets from the node A. To this end, a command packet including the write command and the 1/n data is sent from the node A to the node B. The write command is a command requesting data writing in the node B and 1/n data is one of the *n* fragments of data to be written in the node B. similarly, another command packet including the write command ans the next 1/n data is sent from the node A to the node B. This transmission of the command packets from the node A to the node B is repeated *n* times. On reception of the *n* command packets as normally, the node B transmits to the node A a response packet including a notification of normal reception specifying the effect of normal reception of the command packets as the response to these command packets. By the exchange of the above packets, the data split into *n* packets and transmitted in this state from the node A is written in the node B.

Fig.10 shows an embodiment in which plural response packets deal with a sole command packet. Specifically, Fig.10 shows the sequence of packet exchange when splitting data read out from the node B into *n* packets and transmitting the split packets to the node A. First, a command packet including the readout command is sent from the node A to the node B. The readout command is a command requesting data readout from the node B. On reception of the command packet including the readout command, the node B transmits the response packet including the 1/n readout command to the node A. The 1/n readout data is one of *n* split fragments of data read out from the node B. This transmission of the response packets from the node B to the node A is repeated *n* times. By the exchange of the above packets, the data read out from the node B is split into *n* packets which are then transmitted to the node A.

According to the present invention, it is possible for a sole response packet to deal with plural command packets or for plural response packets to deal with a sole command packet, as shown in Fig.10. This significantly diminishes packet exchange operations to shorten the time required in data transmission as compared to the method of returning a response packet to a command packet when data for transmission is to be split into plural packets.

The frame structure of a packet enabling the above-described transmission method is hereinafter explained.

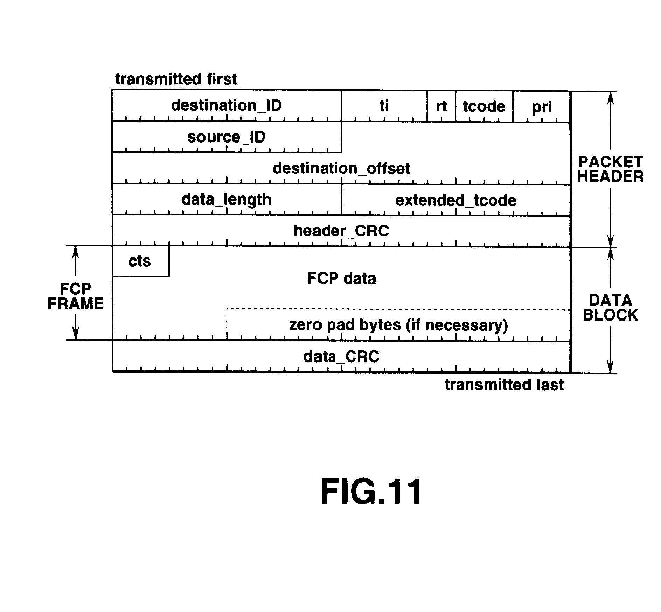

The Asynchronous packet prescribed in IEEE 1394 has a frame structure as shown in Fig.11. That is, the Asynchronous packet has a packet header stating the information on the packet and a data block configured for carrying transmission data.

A packet header has fields, such as destination_ID, t1(transact label), rt(retry code), tcode, pri(priority), source_ID, destination_offset, data_length, extend_tcode and header_CRC.

The destination_ID field states the ID of a node of the destination of packet transmission, specifically the ID number (NodeID) of the node prescribed by the IEEE 1394 bus. The t1 field states the packet number, specifically proper values which allow the destination and the transmitter to recognize the fact that the transaction is pertinent to themselves. The rt field states the information on the retrial methods during bury-time. The tcode field states a code commanding writing a message in the command resister or the response register.

The pri field states the sequence of priority of packets. The source_ID field states the ID of the node of the packet transmitter, specifically the ID number (NodeID of the node prescribed by the IEEE1394 bus. The destination_offset field describes the address of the command resister or the response register. The data_length field describes the information concerning the data length of the data block next following the packet header. The extended_tcode field is used when expanding t-code. The heder_CRC field describes CRC calculated values which execute the check sum of the packet header.

On the other hand, the data block includes cts (command and transaction set), FCP data (function control protocol data) and data_CRC fields. The cts field and FCP data field portions are termed FCP frames. In the data_CRC fields, there are stated CRC calculation values for executing check sum of data blocks.

The cts field defines a format of a FCP frame. That is, the Asynchronous packet includes a FCP frame which has a cts field as a field in which to store the information specifying the type of the format of the FCP frame.

The FCP frame is defined by IEC 1883 (International Electrotechnical Commission 1883). The types of the formats of the FCP frame are classified by the values of the cts field. If, for example, the packet is a command packet, and the value of the cts field is 0000, the FCP frame of the command packet is a command frame prescribed by the AV/C Digital Interface Command Set of IEEE 1394, referred to hereinafter as an AV/C command frame. On the other hand, if the packet is a response packet, and the value of the cts field is 0000, the FCP frame of the command packet is a response frame prescribed by the AV/C Digital Interface Command Set of IEEE 1394, referred to hereinafter as an AV/C response frame.

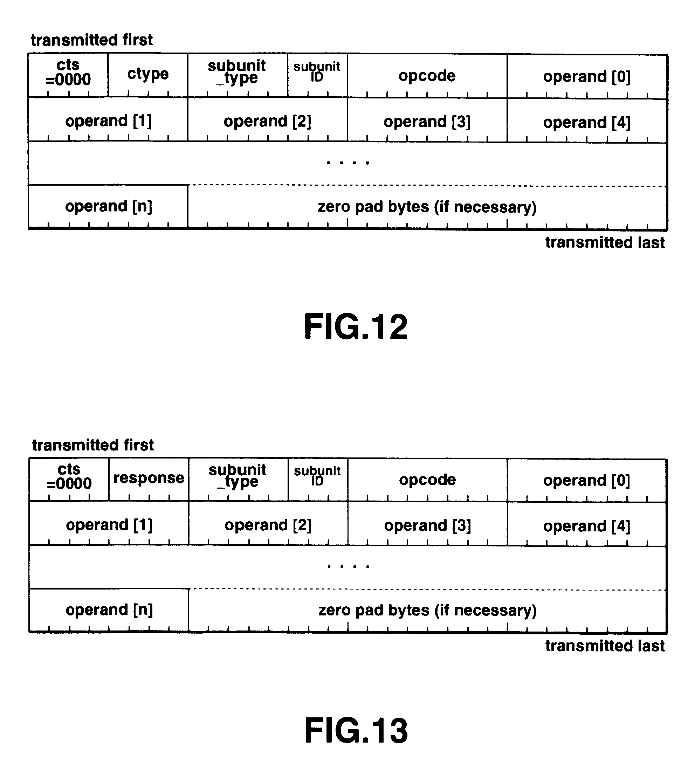

The AV/C command frame is of a frame structure shown in Fig.12. That is, the AV/C command frame has cts, ctype, subunit_type, subunit_ID, opcode and operand fields. Meanwhile, since the Asynchronous packet has 32 bits as a unit, 'o's are appended in necessary at back of the operand field of the AV/C command frame so that the sum will be equal to an integer number of times.

The cts field is 0000 for the AV/C command frame, as described above. The ctype field states command types. If, for example, the ctype value is 0000, it specifies that the command by the packet is a command controlling the equipment of the destination of transmission, that is the CONTROL command. Also, if the ctype value is 0001, it specifies that the command by the packet is a command inquiring the status of the equipment of the destination of packet transmission, that is a STATUS command.

The subunit_feld states the type of the node to which the command is applied. For example, if the value of the subunit_type is 00000, it specifies that the node to which the command is applied is a monitor. If the value of the subunit_type is 00100, it specifies that the node to which the command is applied is a cassette tape recorder. The subunit_ID field states an ID number of the equipment to which the command by the packet is applied.

The opcode field states the code of a specified command and corresponding to the node specified by the subunit_type field, that is the operation code. For example, if the value of the subunit_type field is 00100 and the value of the opcode field is C3h, the command by the packet is 'reproduction' of 'video cassette recorder'. If the value of the subunit_type field is 00100 and the value of the opcode field is C2h, the command by the packet is 'recording' of `video cassette recorder'.

The operand field can be set to an optional number of fields insofar as the size of the Asynchronous packets does not exceed a maximum value. The operand[0], operand[1], ..., operand[n] state the information required for executing the operation codes as set on the opcode field. Specifically, there is stated the information concerning the speed or direction of reproduction.

The AV/C response frame has a frame structure as shown in Fig.13. The AV/C response frame has a frame structure substantially similar to the AV/C command frame, as shown in Fig.13. However, the ctype field in the AV/C command frame is a response field, which states the response to the command. That is, the response field describes a value indicating the normal end state of reception when the reception of a command, for example, has come to a close as normally.

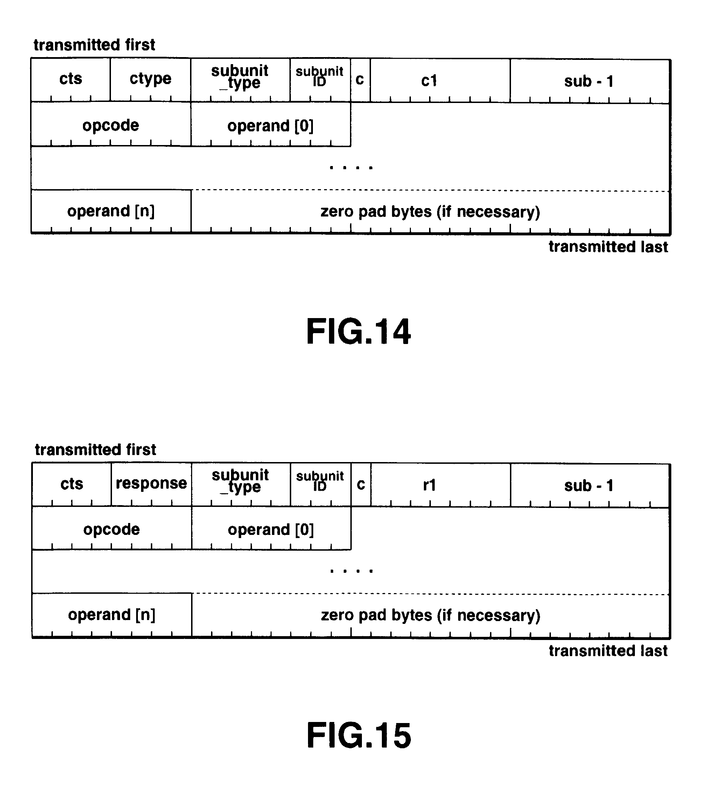

The frame structure shown in Figs.11 to 13 are contents prescribed in IEEE1394 and IEC 1883 at the time of filing of the present application. For details, reference is hrad to pertinent standards. According to the present invention, such a format shown in Figs.14 and 15 is added as a format of the FCP frame by way of extending the above-descrIbed frame structure.

Fig.14 shows an example of a command frame used in applying the present invention. This command frame is referred to hereinafter as a new command frame. That is, in applying the present invention to the IEEE 1394 bus, a frame structure shown in Fig.15 is defined as one of the formats of the FCP frame prescribed by the cts field of the command packet. By using this new response frame, it becomes possible not only to return the command but also to split optional return data into plural packets and to transmit the split packets.

Fig.15 shows an example of a response frame used in applying the present invention. This response frame is referred to hereinafter as a new response frame. That is, in applying the present invention to the IEEE 1394 bus, a frame structure shown in Fig.15 is defined as one of the formats of the FCP frame prescribed by the cts field of the response packet. By using this new response frame, it becomes possible not only to return the response but also to split optional transmission data into plural packets and to transmit the split packets.

Although data that is transmitted or received using a new command frame or a new response frame, it may be enumerated by, for example, moving picture data, still picture data, speech data, letter data and program modules.

The new command frame shown in Fig.14 is the AV/C command frame to which are appended c(Continuity), cl(command label) and sub-l (sub_label) fields. The fields other than the c-field, cl field and sub-l field are the same as those of the AV/C command frame. It should be noted that, since the new command frames are demarcated from the AV/C command frames, as being separate frames, depending on the cts field, it is unnecessary to deal with the commands or codes in the same way as in the case of the AV/C command frame.

In splitting the transmission data into plural packets and transmitting the resulting packets, the information specifying the relation between these packets is stored in the c1 and sub-l fields of the new command frame.
Specifically, in splitting the transmission data into plural packets and transmitting the resulting packets, there is stored a value common to these packets in the cl-field, while the information specifying the sequence of the packets is stored in the sub-l field. In the c-field, the information specifying whether or not the packet under consideration is the last packet.

Stated differently, the cl and sub-l field specify the label number for each command packet and the sub-label number for plural command packets having the same label number. The c filed specifies whether or not plural command packets having the same label number are sent in succession.

By providing the c1 field in the command packet, it becomes possible to mutually associate plural command packets occasionally divided from the transmission data. By providing the sub-l field in the command packet, it becomes possible to comprehend the sequence of the command packets having the same label number, that is the command packets having the same value of the cl field. This allows to comprehend the command packets occasionally split from data and to confirm that there is no lacking command in the series of commands.

When transmitting commands using the above-described new command frames, the operand field is used in the same way as in the case of the AV/C command frame. On the other hand, when optional data is transmitted by the new command frame, the transmission data is carried by a portion of the AV/C command frame corresponding to the operand field in the AV/C command frame. That is, the new command frame has a data field for storage of a command for the node of destination of transmission and/or optional transmission data. Thus, the use of the new command frame enables the transmission not only of commands but also of optional data.

The new response frame shown in Fig.15 is the AV/C command frame to which are appended c(Continuity), rl(response label) and sub-l (sub_label) fields. The fields other than the c-field, r1 field and sub-l field are the same as those of the AV/C command frame. It should be noted that, since the new response frames are demarcated from the AV/C command frames, as being separate frames, depending on the cts field, it is unnecessary to deal with the commands or codes in the same way as in the AV/C command frame.

In splitting the return data into plural packets and transmitting the resulting packets, the information specifying the relation between these packets is stored in the c1 and sub-l fields of the new response frame. Specifically, in splitting the return data into plural packets and transmitting the resulting packets, there is stored a value common to these packets in the rl-field, while the information specifying the sequence of the packets is stored in the sub-l field. In the c-field, the information specifying whether or not the packet under consideration is the last packet is stored.

Stated differently, the rl and sub-l field specify the label number for each command packet and the sub-label number for plural command packets having-the same label number, respectively. The c filed specifies whether or not plural response packets having the same label number are sent in succession.

By providing the r1 field in the command packet, it becomes possible to mutually associate plural response packets occasionally divided from the reception data. By providing the sub-l field in the response packet, it becomes possible to comprehend the sequence of the response packets having the same label number, that is the command packets having the same value of the rl field. This allows to comprehend the command packets occasionally split from data and to confirm that there is no lacking command in the series of commands.

When returning responses using the above-described new command frames, the operand field is used in the same way as in the AV/C command frame. On the other hand, when not only the response is returned but also optional return data is transmitted by the new response frame, the reception data is carried by a portion of the AV/C response frame corresponding to the operand field in the AV/C response frame. That is, the new command frame has a data field for storage of a response to the received packet and/or optional reception data. Thus, the use of the new response frame enables transmission not only of responses but also optional data depending on the received packet.

In the embodiment shown in Fig.14, a new command frame is constituted by adding a field to the AV/C command frame. In the embodiment shown in Fig.15, a new response frame is constituted by adding a field to the AV/C response frame. However, the command or response frames, newly defined for applying the present invention, are not necessarily in need of all of fields used in the AV/C command frames or AV/C response frames.

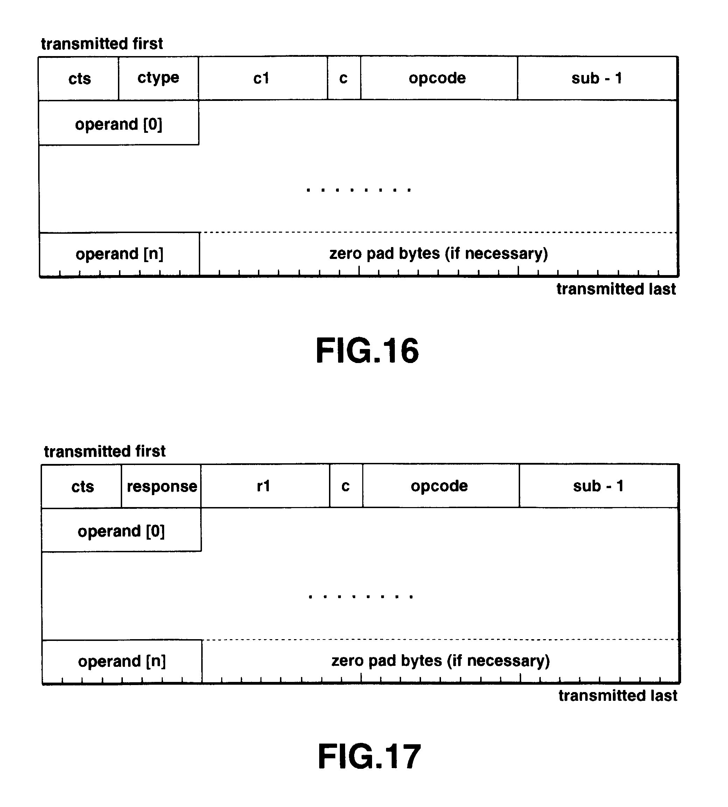

That is, such a frame structure not having the subunit_field or the subunit_ID field may be defined as command frames newly defined in the application of the present invention, as shown in Fig.16. Also, such a frame structure not having the subunit_field or the subunit_ID field may be defined as response frames newly defined in the application of the present invention, as shown in Fig.17.

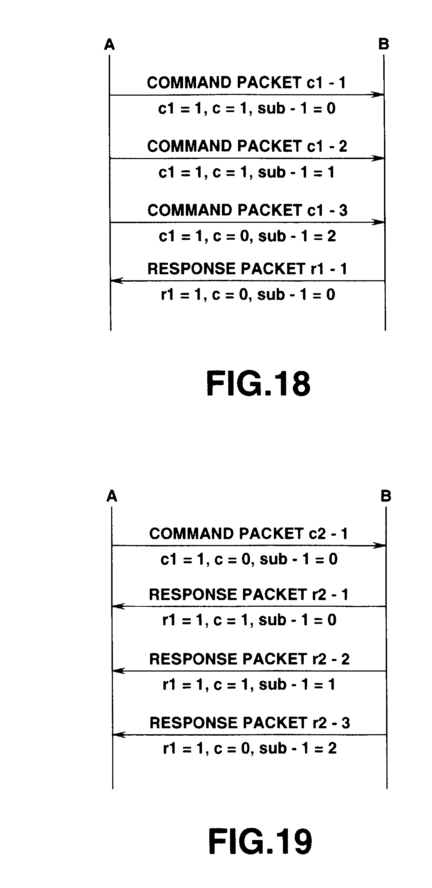

Referring to Figs.18 and 19, packet exchange in case of using the command packet having the new command frame shown in Fig.14 and the response packet having the new response packet shown in Fig.15 is explained.

Fig.18 shows the manner in which, as an example of packet exchange in case of returning a sole response packet for plural command packets, the transmission data is split in three fractions which are transmitted from the node A to the node B by first to third command packets cl-1, cl-2 and cl-3. In this case, the three command packets cl-1, cl-2 and cl-3 are sent from the node A to the node B and a sole response packet rl-1 is returned responsive to these command packets cl-1, cl-2 and cl-3 from the node B to the node A.

In splitting the transmission data into three command packets cl-1, cl-2 and cl-3 and transmitting the split command packets, label numbers are set in the cl fields C in the command packets cl-1, cl-2 and cl-3, as shown in Fig.18. In the embodiment of Fig.18, the values of the c1 fields in the first to third command packets cl-1, cl-2 and cl-3 are all set to ┌1┘. Specifically, there is set in the cl field a value common to the three command packets cl-1, cl-2 and cl-3 for specifying that these three command packets cl-1, cl-2 and cl-3 are a series of command packets.

In the sub_l field, there is stored the information specifying the sequence of these three command packets cl-1, cl-2 and cl-3. Specifically, with the embodiment of Fig.18, there is set ┌0┘ specifying that the command packet is the leading end one in the sub_1 field in the first command packet cl_1 including the initial portion of transmitted data split into three fractions. Similarly, there is set ┌1┘ specifying that the command packet is the second one in the sub_1 field in the second command packet cl_2 including the next portion of the transmitted data. Finally, there is set ┌2┘ specifying that the command packet is the third one in the sub_2 field in the third command packet cl_3 including the trailing portion of the transmitted data.

Also, in the c field, there is stored the information specifying whether or not the command packet is the trailing command packet. Specifically, with the embodiment of Fig.18, there is set ┌1┘ in the c field of the first and second command packets cl-1 and cl-2 for specifying that a command packet having the same label number is present downstream of these command packets. On the other hand, there is set ┌0┘ in the third command packet for specifying that there is no command packet having the same label number downstream of these command packet.

On reception of these three command packets cl-1, cl-2 and cl-3, the node B restores transmission data prior to splitting into three fractions, from these command packets cl-1, cl-2 and cl-3, based on the contents stated in the c1 field, sub-l field and c field.

On reception of the command packet whose c field is set to ┌0┘, that is the last command packet cl-3, the node b returns the response packet rl-1 to the node A. At this time, the same label number as that set in the c field of the command packets cl-1, cl-2 and cl-3, that is ┌1┘, is set in the r1 field. In the sub-l field, there is set ┌0┘ for specifying that the response packet is the leading end one. In the c-field, there is set ┌0┘ for specifying that there is no response packet having the same label number downstream of the response packet.

This transmits the transmission data from the node A to the node B by the three command packets cl-1, cl-2 and cl-3.

Fig.19 shows, as an example of packet exchange when returning plural response packets for a sole command packet, the manner in which return data for the command packet from the node A to the node B is split into three fractions and returned from the node B to the node A by the first to third response packets r2-1, r2-2, r2-3. At this time, a sole command packet c2-1 is sent-from the node A to the node B and three response packets r2-1, r2-2, r2-3 are returned for the command packet c2-1 from the node B to the node A.

In the embodiment shown in Fig.19, the command packet c2-1 is first sent from the node A to the node B. In this command packet c2-1, the label number for the command packet c2-1, for example, ┌1┘, is set in the c1 field. In the sub-1 field, ┌1┘, specifying that the command packet is the leading end one, is set. In the c field, there is set ┌0┘, specifying that there is no command packet having the same label number downstream of the command packet. In the example shown in Fig.19, return data for this command packet c2-1 is split into three fractions which are transmitted from the node B to the node A.

When splitting the return data into three response packets r2-1, r2-2 and r2-3 and transmitting the response packets, the same label number as that set in the c1 field of the command packet c2-1 are set in the r1 fields of these response packets r2-1, r2-2 and r2-3. Specifically, with the embodiment of Fig.19, the values of the r1 fields of the first to third response packets r2-1, r2-2 and r2-3 are all set to ┌1┘. That is, in the r1 fields of the three response packets r2-1, r2-2 and r2-3, there is set a value common to these packets for specifying that these three response packets are a series of response packets.

In the sub-l fields, there is stored the information specifying the sequence of the three response packets r2-1, r2-2 and r2-3. Specifically, with the embodiment of Fig.19, there is set ┌0┘ in the sub_l field of the first response packet r2-1 including the first portion of the return data split into three fractions for specifying that the response packet is the leading end one. In the second response packet r2-2 including the next fraction of the return data, there is set ┌1┘ specifying that response packet is the second one. In the third response packet r2-3 including the trailing end fraction of the return data, there is set ┌1┘ specifying that response packet is the third one.

In the c field, there is stored the information specifying whether or not the response packet is the last one. Specifically, with the embodiment of Fig.19, there is set ┌1┘ in the first and second response packets r2-1 and r2-2 for specifying that three exists a response packet having the same label number downstream of these response packets. On the other hand, in the third response packet r2-3, there is set ┌0┘ for specifying that there is no response packet having the same label number downstream of this response packet.

On reception of these three response packets r2-1, r2-2 and r2-3, the node A restores return data prior to splitting into the three fractions, from these response packets r2-1, r2-2 and r2-3, based on the contents stated in the r1 fields, sub-l fields and fields.

Thus, return data are sent from the node B to the node A by these three response packets r2-1, r2-2 and r2-3.

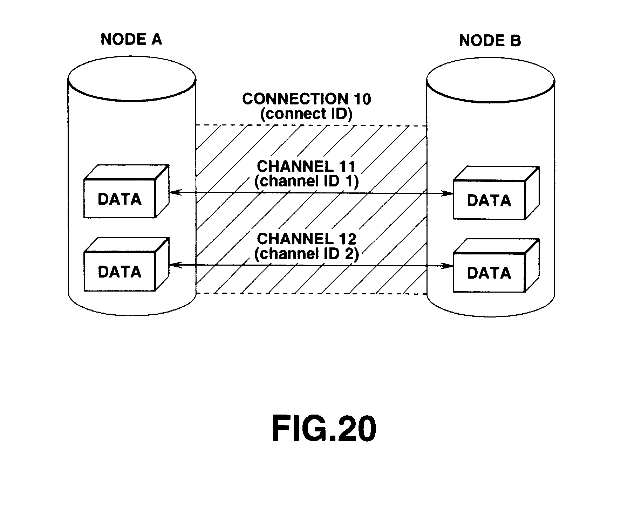

A typical sequence of operations when doing data transmission using a command packet having the new command frame and a response having the new response packet is explained by referring to a conceptualized data transmission model shown in Fig.20.

For doing data transmission using a command packet having a novel command frame and a response packet having a novel response frame, an imaginary connection 10 is set up for specifying a counterpart node in two nodes a and B interconnected by a serial bus, as shown in Fig.20. An ID number is allocated at this time to the connection 10. This ID number is termed connectID. The nodes A, B, between which the connection 10 has been set up, discriminate the counterpart node of the connection 10 by ConnectID.

In the IEEE 1394 bus, the ID number (NodeID) is allocated for the nodes for node identification. However, if bus resetting occurs, the ID numbers of the nodes are occasionally changed. In such case, the connection 10 is again set up based on ConnectID. That is, by allocating ConnectID to each connection, the connection can again be set up even if the ID numbers of the nodes are changed by bus re-setting.

In the connection 10, imaginary channels 11, 12 are provided, and an ID number, termed ChannelID, is allocated to each of the channels 11, 12. If need be, plural channels can be provided in a sole connection ID.

Based on ConnectID allocated to the connection 10 and ChannelID allocated to the channels 11, 12, command and data are exchanged for each of the channels 11, 12 between the nodes A and B. By further providing imaginary channels in a sole connection, plural commands and data can be exchanged by the sole connection.

The commands used in the above-described data transmission are explained. In the present embodiment, CONNECT, DISCONNECT, OPEN, CLOSE, READ, WRITE and ABORT commands are prescribed for implementing the above-described data transmission.

### CONNECT Command

The CONNECT command is used for setting up an imaginary connection for a given node to transmit data or commands to another node. Specifically, when a connection is to be set up from a give node to another node, a command packet, in which a CONTROL command is set in the ctype field and a CONNECT command is set in the opcode field, is sent to the node of the counterpart side to which the connection is to be set up from the first-stated node.

The CONNECT command is used also when it is desired to know whether a connection has already been set up to the counterpart side node. Specifically, if desired to know the status of the connection of the counterpart side node, a command packet, in which a STATUS command is set in the ctype field and a CONNECT command is set in the opcode field, is sent to the counterpart side node.

### DISCONNECT Command

The DISCONNECT command is used when opening the connection set up between nodes. Specifically, when a channel is to be opened, a command packet in which a CONTROL command is set in the ctype field and a DISCONNECT command is set in the opcode field is set is transmitted to the counterpart side node.

### OPEN Command

An OPEN command is used when a given node sets up an imaginary channel to another node. Specifically, when a channel is to be set up from a given node to another node, a command packet, in which a CONTROL command is set in the ctype field and an OPEN command is set in the opcode field, is transmitted to the counterpart side node with which the kennel is to be set up.

The OPEN command is also used when inquiring the channel ID of a channel which has already been set up. Specifically, if desired to know the channel ID of a channel with which the channel has already been set up, a COMMAND packet, in which a STATUS command is set in the ctype field and an OPEN command is set in the opcode field, is transmitted to the counterpart side node.

The CLOSE command is used when opening the channel set up between nodes. Specifically, when opening the channel, a COMMAND packet, in which a CONTROL command is set in the ctype field and a CLOSE command is set in the opcode field, is transmitted to the counterpart side node of the channel which is to be opened.

### READ Command

A READ command is used when a node reads out data owned by another node. Specifically, if data owned by another node is to be read out, a COMMAND packet, in which a CONTROL command is set in the ctype field and a READ command is set in the opcode field, is transmitted to the counterpart side node having data which is desired to be read cut.

The READ command is also used when inquiring the readable data quantity of the contents of the counterpart side node. Specifically, when inquiring the readable data quantity, a command packet, in which a STATUS command is set in the ctype field and the READ command is set in the opcode field, is sent to the node of the inquiry destination.

### WRITE Command

The WRITE command is used in order for a given node to write data of given contents in a different node.
Specifically, when inquiring the readable data quantity, a COMMAND packet, in which a CONTROL command is set in the ctype field and the WRITE command is set in the opcode field, is sent to the node of the destination in which the data is to be written.

The WRITE command is also used when inquiring the volume of the available vacant area of the counterpart side node. Specifically, when inquiring the volume of the available vacant area, a command packet, in which a STATUS command is set in the ctype field and the WRITE command is set in the opcode field, is sent to the node of the inquiry destination.

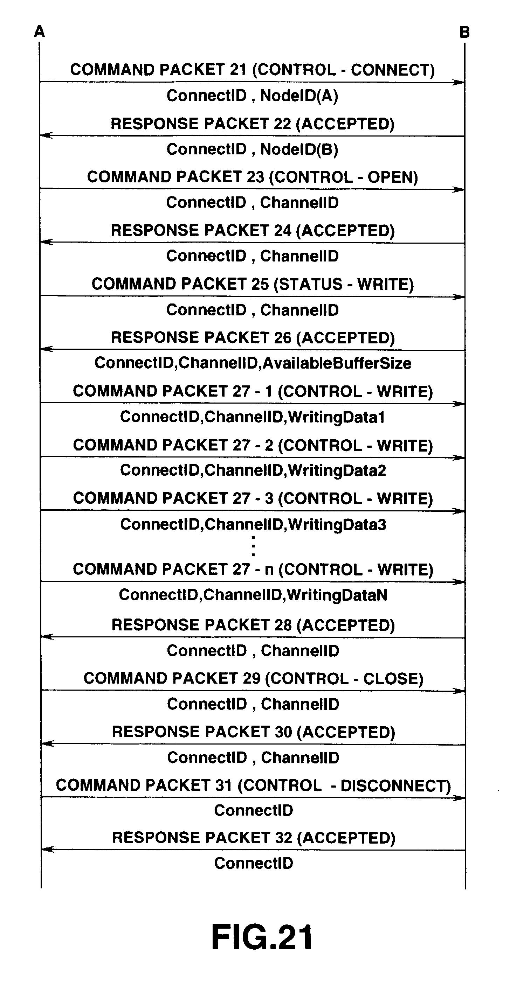

The sequence of operations for writing data from the node A to the node B using the above-described commands is explained by referring to Fig.21. It is assumed that the data written in the node B is split into plural packets and transmitted from the node A.

In the sequence of operations shown in Fig.21, a connection is first set up between the nodes A and B and a channel is established in the connection. The total available area in the node B is then ascertained and subsequently data is written in the node B using plural COMMAND packets. The channel is then opened and the connection between the nodes A and B is also opened. This sequence of operations is explained in detail with reference to Fig.21.

First, the node A requests a connection to the node B, using a CONNECT command. At this time, the node A sends to the node B a COMMAND packet 21 in which the ID number NodeID(A) of the node A and the ConnectID allocated to the connection to be set up are stated in the operand field. Specifically, the command packet 21, whose fields are set as shown in Table 1:

**TABLE 1**

| | | | | | | | |
|---|---|---|---|---|---|---|---|
| field | c1 | sub_1 | c | ctype | opcode | operand[0] | operand [1] |
| set value | 1 | 0 | 0 | CONTROL | CONNECT | connectID | NodeID(A) |

is sent from the node A to the node B.

If the connection has been set up correctly by the command packet 21, the node B returns to the node A a response specifying that connection has been set up correctly. At this time, the node b sends to the node A a response packet 22 in which the ID number of the node B NodeID(B) and the allocated ConnectID are stated in its fields. Specifically, the response packet 22, whose fields have been set as shown in Table 2:

**TABLE 2**

| | | | | | | |
|---|---|---|---|---|---|---|
| fields | r1 | sub_1 | c | response | operand[0] | operand[0] |
| set values | 1 | 0 | 0 | ACCEPTED | connectID | NodeID(B) |

is returned from the node B to the node A.

By the above exchange, the connection is set up between the nodes A and B. If the connection has already been set up between the nodes A and B, it is unnecessary to make the exchange.

The node A then requests to the node B that the channel be established using the OPEN command. At this time, the node A sends to the node B a command packet 23 in whose operand fields have been stated the connectID of the connection in use and the channelID allocated to the channel to be established. Specifically, the command packet 23, whose fields have been set as shown in Table 3:

**TABLE 3**

| | | | | | | | |
|---|---|---|---|---|---|---|---|
| field | c1 | sub_1 | c | ctype | opcode | operand[0] | operand[0] |
| set values | 1 | 0 | 0 | CONTROL | OPEN | ConnectID | ConnectID |

is sent from the node a to the node B.

When a channel is established by the command packet 22, the node B returns to the node A a response specifying that the channel has been established. At this time, the node B sends to the node A a response packet 24 stating the ConnectID of the connection in use and the allocated ChannelID, Specifically, the response packet 24 whose fields have been set as shown in table 4:

**TABLE 4**

| | | | | | | |
|---|---|---|---|---|---|---|
| field | r1 | sub_l | c | response | operand[0] | operand[1] |
| set values | 1 | 0 | 0 | ACCEPTED | ConnectID | ChannelID |

is sent from the node A to the node B.

By the above exchange, the connection is set up between the nodes A and B. If the connection has already been set up between the nodes A and B, it is unnecessary to make the exchange.

The node A then of the node B the volume of the available vacant area of the node B using the WRITE command. Specifically, the command packet 25, whose fields have been set as shown in Table 5:

**TABLE 5**

| | | | | | | | |
|---|---|---|---|---|---|---|---|
| field | c1 | sub_l | c | ctype | opcode | opeerand[0] | operand[1] |
| set values | 1 | 0 | 0 | STATUS | WRITE | connectID | ChannelID |

is sent from the node A to the node B.

On accepting the command packet 25, the node B advises the node A of volume of the available vacant area of the node B. At this time, the node B sends to the node A a response packet 26 in whose operand fields have been stated the ConnectID of the connection in use, the ChannelID of the channel in use and the volume of the available vacant area of the node B AvailableBufferSize. Specifically, the response packet 26, whose fields have been set as shown in Table 6:

**TABLE 6**

| | | | | | | | |
|---|---|---|---|---|---|---|---|
| field | r1 | sub_1 | c | response | operand[0] | operand[1] | operand[2] |
| set values | 1 | 0 | 0 | accepted | connectID | channelID | Available BufferSize |

is sent from the node B to the node A.

The node A then writes data in the node B using the WRITE command. Since the data written in the node B is split into *n* fractions, the first data WritingDatal is first sent. At this time, the node A sends to the node B a command packet 27-1 in whose operand field have been stated ConnectID of the connection in use and the ChannelID of the channel in use and in a residual area of whose FCPdata field has been stated the WritingDatal. Specifically, the command packet 27-1 whose fields have been set as shown in Table 7:

**TABLE 7**

| | | | | | | | | |
|---|---|---|---|---|---|---|---|---|
| field | c1 | sub_1 | c | ctype | opcode | operand [0] | operand [1] | residual area of FCPdata field |
| set values | 1 | 0 | 1 | write | contro 1 | Connect ID | Channel ID | Writing Datal |

is sent from the node A to the node B.

The node A then sequentially transmits data split into *n* fractions to the node B. At this time, the value of the sub_I field is incremented by one for each command packet in order to indicate the order of the command packets corresponding to the divided data fractions to be sent.

Finally, the last one of the n-fractions of the data, that is WritingDataN, is transmitted. At this time, the node A sends to the node B a command packet in whose operand fields have been stated the ConnectID of the connection in use and ChannelID of the channel in use and in the residual area of whose FCPdata field has been stated the WritingDataN. Specifically, a command packet 27-n, whose fields have been set as shown in Table 8, is sent from the node A to the node B. At this time, the value of the c field is set to ┌1┘ up to the command packet previous to the command packet 27-n. However, at the command packet 27-n, the value of the c field is set to ┌0┘ in order to specify that the command packet 27-n is the last one of the packets of data for transmission split into *n* fractions.

**TABLE 8**

| | | | | | | | | |
|---|---|---|---|---|---|---|---|---|
| field | c1 | sub_l | c | ctype | opcode | operand [0] | operand [1] | residual area of FCP data field |
| set values | 1 | n | 0 | control | write | Connect ID | Channel ID | Writing DataN |

When the data sent by the above command packets 27-1 to 27-n is correctly written in the node B, the latter then returns to the node A a response indicating that the data has been written correctly. At this time, the node B sends to the node A response packet 28 stating in its operand fields ConnectID of the connection in use and ChannelID of the channel in use. Specifically, the response packet 28 whose fields have been set as shown in Table 9:

**TABLE 9**

| | | | | | | |
|---|---|---|---|---|---|---|
| field | r1 | sub_l | c | response | operand[0] | operand[1] |
| set values | 1 | 0 | 0 | accepted | ConnectID | ChannelID |

is returned from the node B to the node A.

The node A then requests the node B to open a channel using a CLOSE command. At this time, the node A sends to the node B a command packet 29 stating in its operand fields ConnectID of the connection in use and ChannelID of the channel desired to be opened. Specifically, the command packet 29, whose fields are set as shown in Table 10:

**TABLE 10**

| | | | | | | | |
|---|---|---|---|---|---|---|---|
| field | r1 | sub_l | c | response | opcode | operand[0] | operand[1] |
| set values | 1 | 0 | 0 | control | close | ConnectID | ChannelID |

is sent from the node A to the node B.

When the channel is opened by the command packet 29, the node B returns to the node A a response indicating that the channel has been opened. At this time, the node B sends to the node A a response packet 30 stating in its operand fields ConnectID of the connection in use and ChannelID of the opened channel. Specifically, the response packet 30, whose fields are set as shown in Table 11:

**TABLE 11**

| | | | | | | |
|---|---|---|---|---|---|---|
| field | r1 | sub_l | c | response | operand[0] | operand[1] |
| set values | 1 | 0 | 0 | ACCEPTED | ConnectID | ChannelID |

is returned from the node B to the node A.

By exchanging the command packet 29 and the response packet 30, the channel used between the nodes A and B is opened. Meanwhile, if it is unnecessary to open the channel, exchange of the command packet 29 for opening the channel and the response packet can be dispensed with.

The node A then requests the node B to open the connection using the DISCONNECT command. At this time, the node A sends to the node B a command packet 31 stating in its operand field ConnectID of the connection desired to be opened. Specifically, the command packet 31, whose fields have been set as shown in Table 12:

**TABLE 12**

| | | | | | | |
|---|---|---|---|---|---|---|
| field | c1 | sub_l | c | ctype | opcode | operand[0] |
| set values | 1 | 0 | 0 | control | disconnect | ConnectID |

is sent from the node A to the node B.

When the connection has been opened by the command packet 31, the node B returns to the node A a response specifying that the connection has been opened. At this time, the node B returns to the node A a response packet 32 stating ConnectID of the opened connection in its operand field. Specifically, the response packet 32 whose fields have been set as shown in Table 13:

**TABLE 13**

| | | | | | |
|---|---|---|---|---|---|
| field | r1 | sub_l | c | response | operand[0] |
| set values | 1 | 0 | 0 | accepted | ConnectID |

is returned from the node B to the node A.

By exchanging and the response packet 32, the connection used between the nodes A and B is opened. Meanwhile, if the connection need not be opened, there is no necessity of exchanging the command packet 31 and the response packet 32. for opening the connection.

The foregoing is the sequence of operations in splitting the data from the node A into plural command packets which are then written in the node B. This is summarized in the following Table 14:

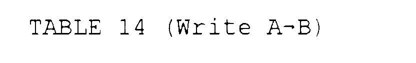

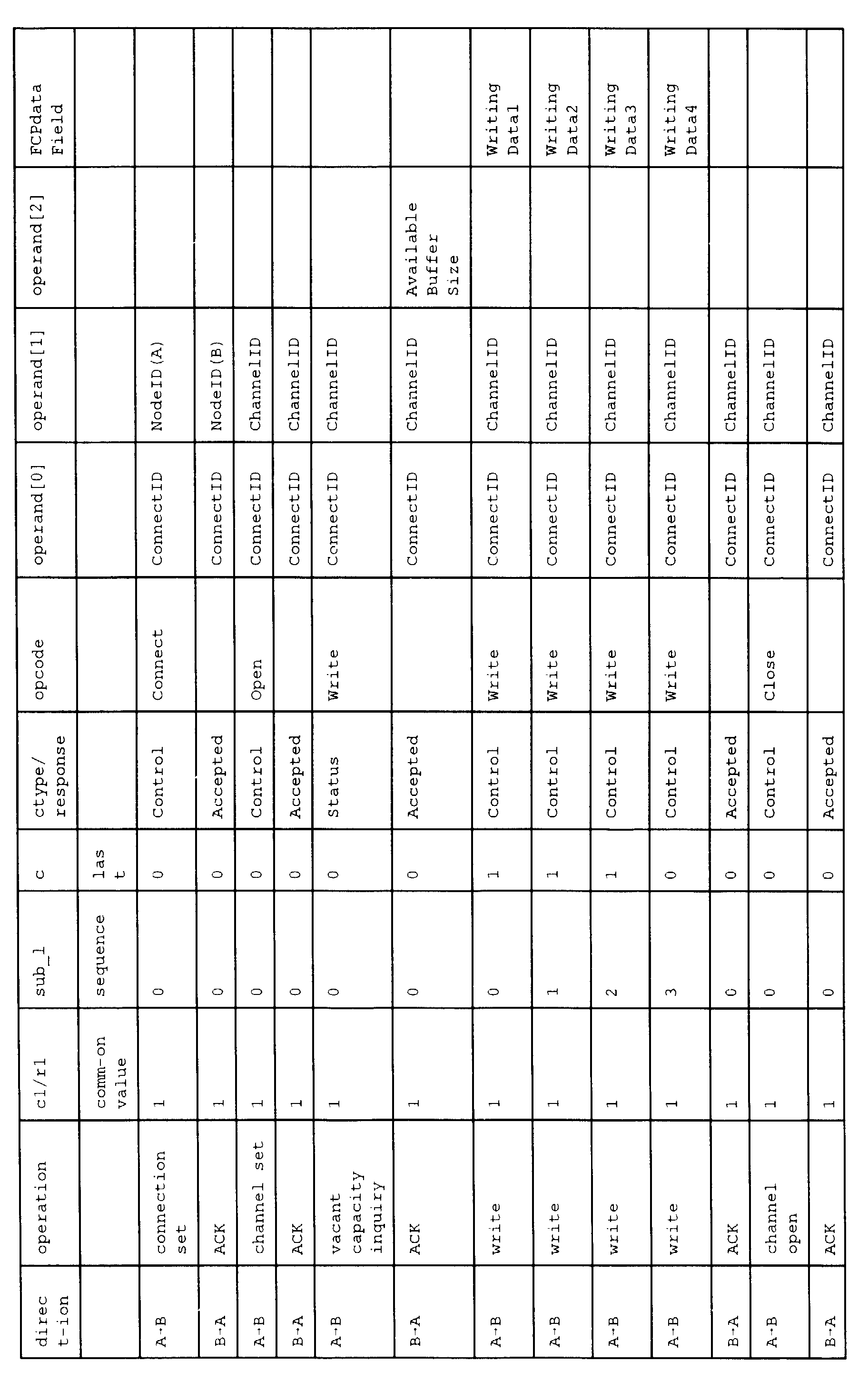

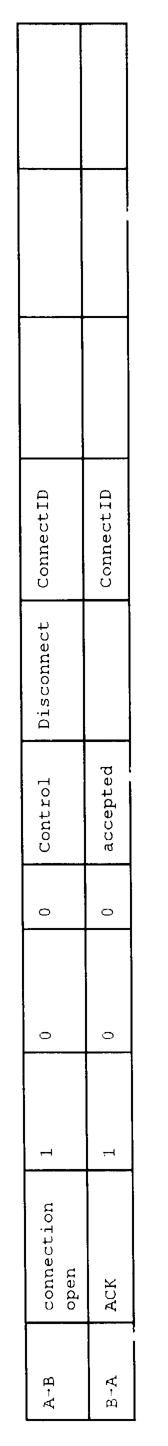

The sequence of operations for reading out data by the node A from the node B using the above commands is explained with reference to Fig.20. It is assumed that the data read out from the node B is split into plural packets and returned in this state from the node B to the node A.

In the sequence shown in Fig.20, a connection is first set up between the nodes A and B and a channel is then established in the connection. After confirming the readable data size, data is read out from the node B using plural command packets. The channel is then opened and the connection between the nodes A and B is opened. This sequence of operations is now explained with reference to Fig.20.

First, the node A requests a connection to the node B using the CONNECT command. At this time, the node A sends to the node B a command packet 41 stating in its operand field the ID number of the node A NodeID(A) and ConnectID allocated to the connection to be set up. specifically, the command packet 41 whose fields are set as shown in table 15:

**TABLE 15**

| | | | | | | | |
|---|---|---|---|---|---|---|---|
| field | c1 | sub_l | c | ctype | opcode | operand[0] | operand[1] |
| set values | 1 | 0 | 0 | control | Connect | ConnectID | NodeID(A) |

is sent from the node A to the node B.

If the connection has been set up correctly by the command packet 41, the node B returns to the node A a response indicating that the connection has been set up correctly. At this time, the node B sends to the node A a response packet 42 stating in its operand field the node ID number of the node B NodeID(B) and the allocated ConnectID. Specifically, the response packet 42, whose fields have been set as shown in Table 16:

**TABLE 16**

| | | | | | | |
|---|---|---|---|---|---|---|
| field | r1 | sub_l | c | response | operand[0] | operand[1] |
| set values | 1 | 0 | 0 | accepted | ConnectlD | NodeID(B) |

is returned form the node B to the node A.

By the above exchange, a connection is set up between the nodes A and B. If the connection has already been set up between the nodes A and B, it is unnecessary to set up the connection newly.

The node A then requests the node B to establish the channel using the OPEN command. At this time, the node A sends to the node B a command packet 43 stating in its operand field ConnectID of the connection in use and ChannelID allocated to the channel to be established. Specifically, the command packet 43, whose fields are set as shown in Table 17:

**TABLE 17**

| | | | | | | | |
|---|---|---|---|---|---|---|---|
| field | c1 | sub_l | c | ctype | opcode | operand[0] | operand[1] |
| set values | 1 | 0 | 0 | control | open | ConnectID | ChannelID |

is sent from the node A to the node B.

If the channel is established by the command packet 43, the node B returns to the node A a response indicating that the channel has now been established. At this time, the node B sends to the node A a response packet 44 stating ConnectID of the connection in use and allocated ChannelID in its operand fields. Specifically, the response packet 44, whose fields are set as shown in Table 18:

**TABLE 18**

| | | | | | | |
|---|---|---|---|---|---|---|
| field | r1 | sub_l | c | response | operand[0] | operand[1] |
| set values | 1 | 0 | 0 | accepted | ConnectID | ChannelID |

is returned from the node B to the node.

By the above exchange, a channel is established between the nodes A and B. If the channel has already been established between the nodes A and B, it is unnecessary. to establish the channel newly.

The node A then inquires of the node B the data size of readable data from the node B using the READ command. At this time, the node A sends to the node B a command packet 45 stating ConnectID of the connection in use and ChannelID of the channel in use in the operand fields. Specifically, the command packet 45, whose fields are set as shown in Table 19:

**TABLE 19**

| | | | | | | | |
|---|---|---|---|---|---|---|---|
| field | c1 | sub_l | c | ctype | opcode | operand[0] | operand[1] |
| set values | 1 | 0 | 0 | status | read | ConnectID | ChannelID |

is sent from the node A to the node B.

On reception of the command packet 45, the node B apprizes the node A of the readable size of data read out from the node B. At this time, the node-B sends to the node A a response packet 46 stating in its operand field ConnectID of the connection in use, ChannelID of the channel in use and the data size AvailableDatasize of data that can be read out from the node B. Specifically, the response packet 46, whose fields are set as shown in Table 20:

**TABLE 20**

| | | | | | | | |
|---|---|---|---|---|---|---|---|
| field | c1 | sub_l | c | ctype | opcode | operand[0] | oprand[1] |
| set values | 1 | 0 | 0 | accepted | ConnectID | ChannelID | Available DataSize |

is sent from the node B to the node A.

The node A then requests the node B to read out data using READ command. At this time, the node A sends a command packet 47 stating ConnectID of the connection in use and ChannelID of the channel in use in its operand field. Specifically, the command packet 47, whose fields are set as shown in Table 21:

**TABLE 21**

| | | | | | | | |
|---|---|---|---|---|---|---|---|
| field | c1 | sub_l | c | ctype | opcode | operand[0] | operand[1] |
| set values | 1 | 0 | 0 | control | read | ConnectID | ChannelID |

is sent from the node a to the node B.

The node B then transmits the data requested by the node A to the node A.

It is assumed that the data read out from the node B is split into *n* fractions which are sent to the node A. Here, the first fractional data ReadingData1 is sent. At this time, the node A sends to the node B a response packet 48-1 stating ConnectID of the connection in use and ChannelID of the channel in use in its operand field and also stating ReadingData1 in the remaining area of the FCPdata field. Specifically, the response packet 48-1, whose fields are set as shown in Table 22:

**TABLE 22**

| | | | | | | | |
|---|---|---|---|---|---|---|---|
| field | r1 | sub_l | c | response | operand[0] | operand[1] | remaining area of FCPdata field |
| set values | l | 0 | 1 | accepted | ConnectID | ChannelID | Reading Datal |

is sent from the node A to the node B.

Similarly, *n* fractional data are sequentially transmitted from the node B to the node A. At this time, the value of the sub_l field is incremented by 1 for each command packet in order to specify the sequence of the response packets for transmitting the fractional data.

Finally, ReadingDataN, which is the trailing end one of the *n* fractional data, is transmitted. At this time, the node B sends to the node A a response packet 48-n stating ConnectID of the connection in use and ChannelID of the channel in use in the operand field and stating ReadingDataN in the remaining area of the FCPdata field. Specifically, the response packet 48-n, whose fields are set as shown in Table 23, is set from the node B to the node A. The value of the c field is set to ┌1┘ up to the command packet directly previous to the command packet 48-n and is set to ┌1┘ for the command packet 48-n in order to specify that this command packet 48-n is the trailing end one of the data packets of data for transmission split into n fractions.

**TABLE 23**

| | | | | | | | |
|---|---|---|---|---|---|---|---|
| field | r1 | sub_l | c | response | operand[0] | operand[1] | remaining area of FCPdata field |
| set values | 1 | n | 0 | accepted | ConnectID | ChannelID | reading DataN |

On completion of data readout from the node B, the node A requests the node B to open the channel using the CLOSE command. At this time, the node A sends to the node B a command packet 49 stating ConnectID of the connection in use and ChannelID of the channel to be opened in its operand field. Specifically, the command packet 49, whose fields are set as shown in Table 24:

**TABLE 24**

| | | | | | | | |
|---|---|---|---|---|---|---|---|
| field | r1 | sub_l | c | ctype | opcode | operand[0] | operand[1] |
| set values | 1 | 0 | 0 | control | close | ConnectID | ChannelID |

is sent from the node A to the node B.

On opening the channel by the command packet 49, the node B returns to the node A a response specifying that the channel has been opened. At this time, the node B sends a response packet 50 stating ConnectID of the connection in use and ChannelID of the opened channel in its operand field. Specifically, the response packet 50, whose fields are set as shown in Table 25:

**TABLE 25**

| | | | | | | |
|---|---|---|---|---|---|---|
| field | r1 | sub_l | c | response | operand[0] | operand[1] |
| set values | 1 | 0 | 0 | accepted | ConnectID | ChannelID |

is returned from the node B to the node A.

By exchanging the command packet 49 and the response packet 50, the channel used between the nodes A and B is opened. Meanwhile, if the channel need no be opened, there is no necessity of exchanging the command packet 49 for opening the connection and the response packet 50.

The node A then requests the node B to open the connection using the DISCONNECT command. At this time, the node A sends to the node B a command packet 51 stating ConnectID of the connection to be opened in its operand field. Specifically, the command packet 51, whose fields are set as shown in Table 26:

**TABLE 26**

| | | | | | | |
|---|---|---|---|---|---|---|
| field | c1 | sub_l | c | ctype | opcode | operand[0] |
| set values | 1 | 0 | 0 | control | disconnect | ConnectID |

is sent from the node A to the node B.

On opening the connection by the command packet 51, the node B returns to the node A a response indicating that the connection has been opened. At this time, the node B sends to the node A a response packet 52 stating ConnectID of the opened connection in its operand field. Specifically, the response packet 52, whose fields are set as shown in Table 27:

**TABLE 27**

| | | | | | |
|---|---|---|---|---|---|
| field | r1 | sub_l | c | response | operand[0] |
| set values | 1 | 0 | 0 | accepted | ConnectID |

is returned from the node B to the node A.

By exchanging the command packet 51 and the response packet 52, the channel used between the nodes A and B is opened. Meanwhile, if the channel need not be opened, there is no necessity of exchanging the command packet 51 for opening the connection and the response packet 52.

The foregoing is the sequence of operations used in splitting data from the node B into plural command packets and reading out the split data. This is summarized in Table 28:

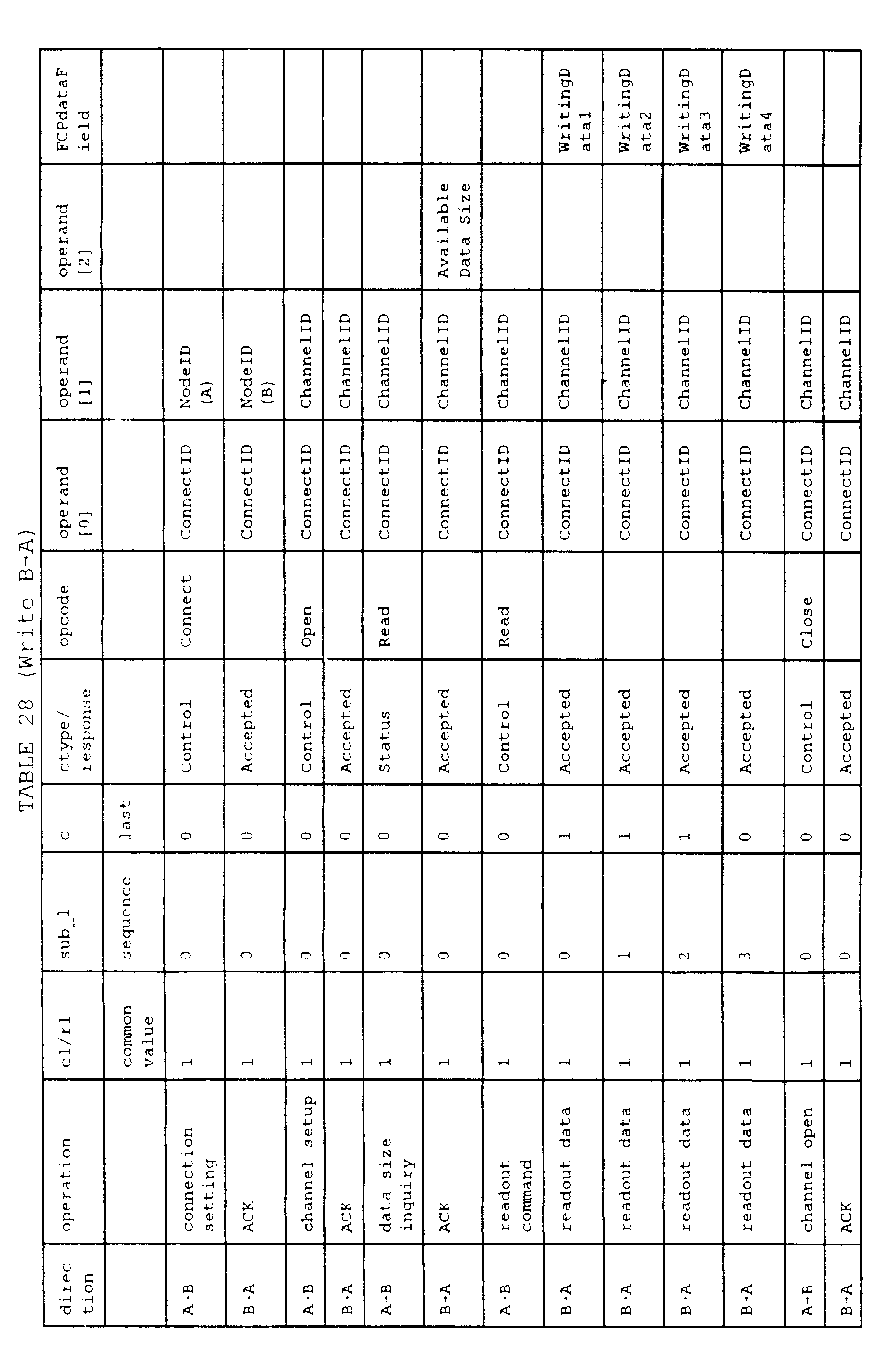

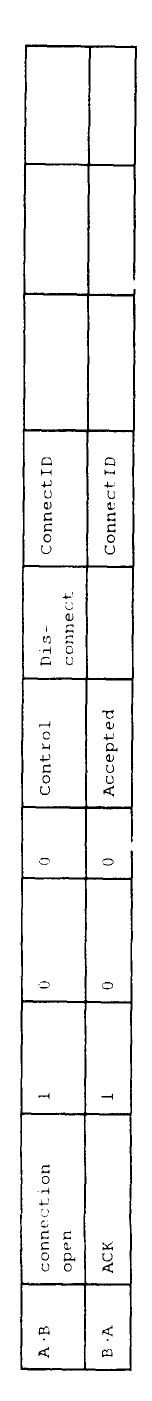

It should be noted that a recording medium in the meaning of the present invention is not limited to any specific type provided that the recording medium has stored therein packets including command codes. The recording medium according to the present invention encompasses optical disc mediums, known as CD-ROMs, magnetic disc mediums, such as floppy discs, semiconductor devices, such as ROM, paper mediums stating codes signals per se circulated on communication networks, typified by Internet, electro-magnetic waves per se circulated as electro-magnetic waves by radio communication, typified by portable telephone, or any other mediums, without regard to whether or not these mediums constitute physical entities.

Although the preferred embodiments of the present invention have been explained taking an example of the IEEE 1394 bus, the present invention can be applied to other than the IEEE 1394 bus. That is, the present invention is applicable to data transmission/reception of data which cannot be accommodated in a packet, in addition to command transmission/reception, despite the fact that the commands were conventionally assumed to be sent by a sole packet.

## Claims

1. A data transmission apparatus for transmitting packet data comprising:
means for transmitting data in a pre-set format;
said format including the information specifying an attribute common to a packet group made up of a plurality of packets and/or an attribute of each packet making up said packet group.

2. A data reception apparatus for receiving packet data comprising:
means for receiving data of a pre-set format;
said format including the information specifying an attribute common to a packet group made up of a plurality of packets and/or an attribute of each packet making up said packet group.

3. A method for transmitting packet data comprising:
the step of transmitting data in a pre-set format;
said format including the information specifying an attribute common to a packet group made up of a plurality of packets and/or an attribute of each packet making up said packet group.

4. A method for receiving packet data comprising:
the step of receiving data of a pre-set format;
said format including the information specifying an attribute common to a packet group made up of a plurality of packets and/or an attribute of each packet making up said packet group.

5. A data structure of a packet data of a pre-set format,
said format including the information specifying an attribute common to a packet group made up of a plurality of packets and/or an attribute of each packet making up said packet group.

6. A recording medium having packet data of a pre-set format stored thereon,
said format including the information specifying an attribute common to a packet group made up of a plurality of packets and/or an attribute of each packet making up said packet group.

7. A communication apparatus for transmitting/receiving packet data, comprising:
means for transmitting data in a pre-set format; and
means for receiving data in the pre-set format
said format including the information specifying an attribute common to a packet group made up of a plurality of packets and/or an attribute of each packet making up said packet group.

8. A communication method for transmitting/receiving packet data, comprising the steps of:
transmitting data in a pre-set format; and
receiving data in the pre-set format
said format including the information specifying an attribute common to a packet group made up of a plurality of packets and/or an attribute of each packet making up said packet group.

9. A communication method for transmitting/receiving a plurality of (n number of) packet data of a pre-set format, said format including the information specifying an attribute common to a packet group made up of a plurality of packets and/or an attribute of each packet making up said packet group, said method comprising:
a first step of transmitting/receiving said common attribute and the attribute of each packet; and
a n'th step of transmitting/receiving said common attribute which is the same as said common attribute and the attribute of each packet different from that transmitted or received in said first step.

10. A data transmission apparatus according to claim 1, a data reception apparatus according to claim 2, a data transmission method according to claim 3, a data reception method according to claim 4, a data structure according to claim 5 or a recording medium according to claim 6 wherein said format conforms to the FCP frame prescribed in IEEE1883.

11. A data transmission apparatus according to claim 1, a data reception apparatus according to claim 2, a data transmission method according to claim 3, a data reception method according to claim 4, a data structure according to claim 5 or a reception method according to claim 6 wherein said format conforms to the Asynchronous packet prescribed in IEEE1394.

12. A data transmission apparatus according to any one of claims 1, 10 and 11, a data transmission apparatus according to any one of claims 2, 10 and 11, a data transmission method according to any one of claims 3, 10 and 11, a data reception method according to any one of claims 4, 10 and 11, a data structure according to any one of claims 5, 10 and 11, a reception method according to any one of claims 6, 10 and 11 or a communication method according to claim 9 wherein the attribute of each packet is a code specifying whether or not each packet is the last packet in the packet group.

13. A data transmission apparatus according to claim 1 or 11, a data reception apparatus according to claim 2 or claim 11, a data transmission method according to claim 3 or claim 11, a data reception method according to claim 4 or claim 11, a data structure according to claim 5 or claim 11 or a reception method according to claim 6 or claim 11 wherein said attribute common to said packet group is a code specifying the sequence of each packet in said packet group.

14. A data transmission apparatus according to claim 10 or claim 11, a data reception apparatus according to claim 10 or claim 11, a data transmission apparatus according to claim 10 or claim 11, a data reception method according to claim 10 or claim 11, a data structure according to claim 10 or claim 11 or a recording medium according to claim 10 or claim 11 wherein said attribute common to said packet group is an identification code appended to said packet group.

15. A data transmission apparatus according to claim 1, a data reception apparatus according to claim 2, a data transmission method according to claim 3, a data reception method according to claim 4, a data structure according to claim 5, a recording medium according to claim 6 or a communication method according to claim 9 wherein said attribute common to said packet group is an identification code accorded to said packet group.

16. A data transmission apparatus according to claim 10, a data reception apparatus according to claim 10, a data transmission method according to claim 10, a data reception method according to claim 10, a data structure according to claim 10, a recording medium according to claim 10 or a communication method according to claim 9 wherein the attribute of each packet is a code specifying the sequence of each packet in the packet group.
